(19) Europäisches Patentamt
European Patent Office
Office européen des brevets

(11) Numéro de publication: **0 055 147**
**A1**

(12) **DEMANDE DE BREVET EUROPEEN**

(21) Numéro de dépôt: **81401734.9**

(22) Date de dépôt: **29.10.81**

(51) Int. Cl.³: **C 08 F 10/02**, C 08 F 4/62, C 08 F 4/64

(30) Priorité: **23.12.80 FR 8027270**

(43) Date de publication de la demande: **30.06.82**
*Bulletin 82/26*

(84) Etats contractants désignés: **AT BE CH DE GB IT LI LU NL SE**

(71) Demandeur: **Société Chimique des Charbonnages, Tour Aurore Place des Reflets Cédex no 5, F-92080 Paris La Défense 2 (FR)**

(72) Inventeur: **Bujadoux, Karel, 31 Avenue Van Pelt, F-62300 Lens (FR)**

(74) Mandataire: **Dubost, Thierry, Société Chimique des Charbonnages Service Propriété Industrielle B.P. No 1, F-62160 Bully Les Mines (FR)**

(54) **Activateur comprenant un composé fluoré pour la polymérisation de l'éthylène.**

(57) L'activateur a pour formule $(AlR_2F)$ $(AlR_2X)_a$ $(AlR_2H)_b$ $(AlR_3)_c$ dans laquelle R désigne un groupe alkyle ayant de 1 à 12 atomes de carbone X désigne un halogène autre que le fluor, $0,1 \leq a \leq 0,4$, $0,1 \leq b \leq 0,4$ et $0,05 \leq c \leq 0,2$ et $a = 0$ lorsque $b \neq 0$ et/ou $c \neq 0$.

Il est utilisable dans un procédé de polymérisation de l'éthylène sous une pression comprise entre 200 et 2500 bars et à une température comprise entre 160° et 300°C.

Application à la fabrication de polyéthylène de qualité améliorée.

EP 0 055 147 A1

ACTORUM AG

La présente invention concerne des activateurs entrant dans la composition de systèmes catalytiques utiles pour la polymérisation de l'éthylène.

De nombreuses variétés de catalyseurs de type Ziegler sont déjà connues pour la polymérisation de l'éthylène et des $\alpha$-oléfines. Ces catalyseurs comprennent généralement le constituant catalytique proprement dit, consistant en au moins un composé halogéné d'un métal de transition des groupes IV à V de la Classification Périodique, et un activateur choisi parmi les hydrures et les composés organométalliques des métaux des groupes I à III de la Classification Périodique. Le constituant catalytique comprenant le métal de transition peut, le cas échéant, être fixé sur un support inerte tel que l'alumine, la silice, la magnésie, les halogénures de magnésium, etc...

La présente invention se rapporte plus particulièrement à des activateurs entrant dans la composition de systèmes catalytiques de type Ziegler capables de polymériser l'éthylène, éventuellement en présence d'au moins une $\alpha$-oléfine, sous haute pression et à haute température. L'invention se rapporte également à un procédé de polymérisation de l'éthylène sous pression élevée (supérieure à 200 bars) et à température élevée (supérieure à 170°C) en présence de tels systèmes catalytiques.

Les activateurs de polymérisation les plus fréquemment cités dans la littérature sont les hydrures de lithium et/ou d'aluminium, les trialkylaluminiums, les alkylsiloxyalanes et les chlorures d'alkylaluminium. La littérature donne de rares exemples d'activateurs contenant un composé halogéné de l'aluminium, l'halogène dudit composé étant autre que le chlore. Cependant le brevet français n° 1.214.965 décrit l'emploi pour la polymérisation des $\alpha$-oléfines - en particulier celles ayant de 3 à 10 atomes de carbone - à basse température (inférieure à 150°C) et sous basse pression (de 1 à 30 atmosphères) d'un activateur constitué par un mélange d'halogénure d'alkylmétal (l'halogène étant autre que le fluor) et de fluorure d'alkylmétal, le rapport de l'halogénure au fluorure étant compris entre 9 et 1. Le brevet français n° 1.255.970 décrit la polymérisation des oléfines à basse température (inférieure à 100°C) en présence d'un catalyseur obtenu en traitant le mélange de réaction de $TiCl_4$ et d'un composé organoaluminique halogéné par un mélange d'un trialkylaluminium et d'un fluorure métallique, le rapport trialkylaluminium : fluorure métallique : dihalogénure d'alkylaluminium (formé par réduction de $TiCl_4$) étant compris entre 0,1 : 0,9 : 1 et 0,9 : 0,1 : 1. Enfin le brevet japonais n° 71/34.612 décrit la polymérisation en solution du propylène à 160°C et sous 35 bars

en présence d'un mélange de trichlorure de titane et de fluorure de diéthylaluminium dans un rapport molaire Al/Ti égal à 2.

D'autre part il est connu de polymériser l'éthylène sous une pression comprise entre 200 et 2500 bars environ et à une température comprise entre 160° et 300°C environ. Dans le cadre d'un tel procédé on cherche à améliorer la qualité du polymère produit en modifiant notamment les paramètres suivants : masse volumique, masse moléculaire, répartition des masses moléculaires. Le but de la présente invention consiste donc à mettre au point des catalyseurs utilisables pour polymériser l'éthylène dans les conditions de haute température et de haute pression définies ci-dessus et capables d'améliorer la qualité du polymère produit.

Les activateurs de polymérisation entrant dans le cadre de la présente invention comprennent un monofluorure de dialkylaluminium mélangé à des quantités mineures d'hydrure ou d'halogénure (l'halogène étant autre que le fluor) de dialkylaluminium ou encore le trialkylaluminium. Ils répondent généralement à la formule $(AlR_2F)\ (AlR_2X)_a\ (AlR_2H)_b\ (AlR_3)_c$ dans laquelle R désigne un groupe alkyle ayant de 1 à 12 atomes de carbone, X désigne un halogène autre que le fluor, $0,1 \leqslant a \leqslant 0,4$, $0,1 \leqslant b \leqslant 0,4$ et $0,05 \leqslant c \leqslant 0,2$ et $a = 0$ lorsque $b \neq 0$ et/ou $c \neq 0$. X peut donc désigner le chlore, le brome ou l'iode.

Les activateurs de polymérisation entrant dans le cadre de la présente invention peuvent être préparés par deux méthodes. La première méthode consiste à faire réagir un trialkylaluminium sur le trifluorure d'aluminium, le rapport molaire du premier réactif au second réactif étant voisin de 2, à une température de l'ordre de 120° à 180°C, puis à récupérer le produit formé par filtration ou décantation. Le produit formé répond à la formule

$$(AlR_2F)\ (AlR_2H)_b\ (AlR_3)_c$$

dans laquelle R, b et c ont les significations susmentionnées. Il contient plus ou moins de trialkylaluminium selon le degré d'avancement de la réaction ayant présidé à sa formation, et plus ou moins d'hydrure de dialkylaluminium selon la température réactionnelle.

La seconde méthode consiste à effectuer une réaction d'échange d'halogène entre un halogénure de dialkylaluminium (l'halogène étant autre que le fluor) et un fluorure de métal alcalin. Cette réaction est effectuée dans un hydrocarbure solvant aliphatique ou cycloaliphatique à une température de l'ordre de 80° à 120°C, et suivie d'une étape de filtration pour séparer l'halogénure de métal alcalin formé en même temps que le fluorure de dialkylaluminium, lequel reste en solution dans le solvant

réactionnel. Le produit formé répond à la formule

$$(AlR_2F)\ (AlR_2X)_a$$

dans laquelle R, X et a ont les significations susmentionnées. Il contient plus ou moins d'halogénure de dialkylaluminium selon le degré d'avancement de la réaction ayant présidé à sa formation.

Le comportement des activateurs selon l'invention vis-à-vis de la polymérisation de l'éthylène dans des conditions de pression élevée et de température élevée est remarquable en ceci que, étant utilisés conjointement avec un catalyseur donné, ils permettent d'augmenter de façon importante la masse moléculaire moyenne du polymère formé, par rapport à un halogénure de dialkylaluminium ou à un trialkylaluminium, sans nuire aux autres performances, notamment le rendement catalytique en polymère.

La présente invention se rapporte également à un système catalytique comprenant d'une part au moins un activateur tel que décrit précédemment et d'autre part au moins un catalyseur comprenant au moins un halogénure d'un métal de transition des groupes IV B à VI B de la Classification Périodique, l'état de valence dudit métal dans ledit halogénure n'étant pas supérieur à 3, le rapport atomique de l'aluminium de l'activateur au métal de transition du catalyseur étant compris entre 0,1 et 10. Le catalyseur peut encore facultativement comprendre un trihalogénure d'aluminium, un halogénure d'un métal du groupe VIII de la Classification Périodique, et un support inerte tel que l'alumine, la silice, la magnésie, les halogénures de magnésium ou de manganèse. A titre d'exemples, on pourra utiliser comme catalyseur le trichlorure de titane (éventuellement syncristallisé avec le trichlorure d'aluminium sous la forme $TiCl_3, \frac{1}{3}\ AlCl_3$), le trichlorure de vanadium ou leurs mélanges.

Enfin la présente invention se rapporte à un procédé de polymérisation de l'éthylène, sous une pression comprise entre 200 et 2 500 bars et à une température comprise entre 160° et 300°C, en présence d'un système catalytique tel que décrit précédemment, le temps de séjour moyen du système catalytique dans le réacteur de polymérisation étant compris entre 2 et 100 secondes. Ce temps de séjour dépend de la température dans le réacteur en ce sens qu'il est d'autant plus élevé que la température est plus basse. Ce procédé peut mettre en jeu, notamment lorsque la température et/ou la pression de polymérisation ne sont pas très élevées, la présence d'un hydrocarbure inerte ayant jusqu'à 5 atomes de carbone tel que par exemple propane, butane ou pentane.

Lorsque dans le procédé selon l'invention on utilise un réacteur

autoclave ou tubulaire ayant plusieurs zones réactionnelles, il pourra être avantageux, en vue de produire certaines qualités de polymères, d'adopter une disposition particulière de l'installation de polymérisation comme par exemple l'une de celles décrites dans les brevets français n° 2.346.374 et 2.385.745. Souvent il sera utile pour contrôler l'indice de fluidité du polymère, notamment du polyéthylène, d'effectuer la polymérisation en présence d'un agent de transfert de chaîne comme l'hydrogène. Dans le procédé haute pression, cet agent sera utilisé à raison de 0,04 à 2 % en volume par rapport à l'éthylène.

Le procédé selon l'invention permet, en ce qui concerne la polymérisation ou la copolymérisation de l'éthylène, de produire toute une gamme de polymères dont la masse volumique est comprise entre 0,905 et 0,960 g/cm3 et dont l'indice de fluidité est compris entre 0,1 et 100 dg/mn environ. Les polymères de masse volumique relativement basse, par exemple comprise entre 0,905 et 0,935 g/cm3, sont obtenus en copolymérisant l'éthylène avec une $\alpha$-oléfine ayant de 3 à 8 atomes de carbone, par exemple le propène à raison de 15 à 35 % en poids, ou bien le butène-1 à raison de 15 à 60 % en poids. Les polymères de masse volumique intermédiaire, par exemple comprise entre 0,935 et 0,945 g/cm3, sont obtenus en copolymérisant l'éthylène avec une $\alpha$-oléfine ayant de 3 à 8 atomes de carbone, par exemple le propène à raison de 5 à 15 % en poids, ou bien le butène-1 à raison de 8 à 20 % en poids.

Le procédé selon l'invention permet d'améliorer la qualité du polymère produit en modifiant les paramètres de masse moléculaire moyenne, de masse volumique et de répartition des masses moléculaires, tout en ne diminuant que très faiblement le rendement catalytique en polymère. D'autres avantages de l'invention apparaîtront à la lecture des exemples suivants donnés à titre illustratif et non limitatif.

EXEMPLE 1

a) Préparation de l'activateur

On fait réagir 21 g de trifluorure d'aluminium préalablement broyé pendant une durée de 16 heures avec 57 g de triéthylaluminium. La réaction est poursuivie à une température de 130°C pendant 6 heures puis à une température de 160°C pendant 16 heures. La liqueur surnageante, récupérée par filtration ou décantation, est mise en solution dans une coupe d'hydrocarbures $C_{11}$-$C_{12}$ à une concentration de 0,68 mole/l. La formule précise de la liqueur est déterminée en dosant les fonctions triéthylaluminium résiduelles, ainsi que les fonctions hydrures de diéthylaluminium par la méthode de la phénazine décrite par D.E. Jordan, Analyti-

cal Chemistry 1968, 40, n° 14, pages 2150-2153. Cette formule dans laquelle Et désigne le radical éthyle, est la suivante :

$$(AlEt_2F)_{0,76}\ (AlEt_2H)_{0,17}\ (AlEt_3)_{0,07}$$

b) Polymérisation

On effectue la polymérisation de l'éthylène en continu sous une pression de 600 bars dans un réacteur autoclave de volume 0,6 l maintenu à la température de 230°C en injectant dans ledit réacteur un système catalytique à l'état dispersé, de telle sorte que le temps de séjour moyen du système catalytique dans le réacteur soit égal à 30 secondes environ. On injecte 0,75 % en volume d'hydrogène dans le réacteur. Le système catalytique utilisé est constitué du composé $TiCl_3$, $\frac{1}{3}$ $AlCl_3$ activé par la liqueur de fluorure de diéthylaluminium préparée précédemment et mise en solution, le rapport atomique d'activation Al/Ti étant égal à 6.

Le tableau I ci-après indique le rendement catalytique $R_c$ exprimé en kilogrammes de polymère par milliatome de titane, la masse moléculaire moyenne en nombre $M_n$, le pourcentage B de masses moléculaires inférieures à 5 000 (déterminés par chromatographie de perméation de gel) et l'indice de fluidité I.F. (mesuré selon la norme ASTM D-1238 et exprimé en dg/mn).

EXEMPLES 2 et 3 (comparatifs)

On polymérise l'éthylène dans les mêmes conditions opératoires que celles de l'exemple 1, à l'exception de la nature de l'activateur et de la quantité d'hydrogène injectée dans le réacteur. Ici l'activateur est soit le triéthylaluminium (exemple 2) soit le chlorure de diéthylaluminium (exemple 3). La quantité d'hydrogène est de 0,5 % en volume dans les deux exemples. Les résultats sont consignés dans le tableau I.

EXEMPLE 4

a) Préparation de l'activateur

On fait réagir 46,5 g de chlorure de diéthylaluminium et 19,5 g de fluorure de sodium. La réaction est effectuée en solution dans le méthylcyclohexane, pendant 7 heures 30 minutes à une température de 100°C. La phase liquide est séparée par filtration et dosée. Les concentrations respectives des deux espèces présentes, le fluorure de diéthylaluminium (2,50 moles/l) et le chlorure de diéthylaluminium, permettent de déterminer la formule exacte de l'activateur :

$$(AlEt_2F)_{0,75}\ \ (AlEt_2Cl)_{0,25}$$

b) Polymérisation

On polymérise l'éthylène dans les mêmes conditions opératoires que celles de l'exemple 1, à l'exception de la quantité d'hydrogène injectée dans le réacteur et de la nature de l'activateur. La quantité d'hydrogène est de 1 % en volume. L'activateur utilisé est celui préparé ci-dessus. Les résultats sont consignés dans le tableau I.

EXEMPLES 5 (comparatif) et 6

On polymérise l'éthylène en continu sous une pression de 1200 bars dans un réacteur autoclave cylindrique de volume 3 litres divisé, au moyen d'écrans, en trois zones identiques maintenues respectivement à des températures de 220°C, 250°C et 240°C. La polymérisation est effectuée en présence de 0,75 % en volume d'hydrogène. Le catalyseur utilisé est le composé $TiCl_3, \frac{1}{3} AlCl_3$ dispersé et activé :

- par le chlorure de diéthylaluminium pour l'exemple 5,
- par la solution de l'activateur obtenu dans l'exemple 1-a), pour ce qui concerne l'exemple 6.

Dans les deux cas, le rapport atomique d'activation Al/Ti est égal à 3. Les résultats sont consignés dans le tableau I.

EXEMPLE 7

On polymérise l'éthylène dans les mêmes conditions opératoires que celles des exemples 5 et 6, à l'exception de la quantité d'hydrogène, et de la nature du système catalytique. On utilise 2 % d'hydrogène en volume et on choisit comme activateur celui obtenu dans l'exemple 4-a) et comme catalyseur un composé de formule $TiCl_3, \frac{1}{3} AlCl_3, VCl_3$. Les résultats sont consignés dans le tableau I. Le polymère obtenu a une masse volumique de 0,963 g/cm3.

TABLEAU I

| Exemple | $R_c$ | $M_n$ | B % | I.F. |
|---|---|---|---|---|
| 1 | 2,6 | 11.500 | 6,0 | 5,8 |
| 2 | 3,0 | 9.000 | 8,0 | 5,9 |
| 3 | 1,7 | 8.500 | 7,5 | 1,6 |
| 4 | 1,5 | 11.000 | 7,0 | 8,0 |
| 5 | 2,7 | 18.000 | 5,3 | 0,4 |
| 6 | 2,4 | 33.500 | 2,6 | 0,2 |
| 7 | 4,8 | 23.000 | 3,4 | 6,2 |

REVENDICATIONS

1. Activateur de polymérisation comprenant au moins un composé organométallique de l'aluminium, caractérisé en ce qu'il comprend un monofluorure de dialkylaluminium mélangé à des quantités mineures d'hydure ou d'halogénure (l'halogène étant autre que le fluor) de dialkylaluminium ou encore de trialkylaluminium.

2. Activateur de polymérisation selon la revendication 1, caractérisé en ce qu'il a pour formule $(AlR_2F)\ (AlR_2H)_b\ (AlR_3)_c$ dans laquelle R désigne un groupe alkyle ayant de 1 à 12 atomes de carbone, $0{,}1 \leqslant b \leqslant 0{,}4$ et $0{,}05 \leqslant c \leqslant 0{,}2$.

3. Activateur de polymérisation selon la revendication 1, caractérisé en ce qu'il a pour formule $(AlR_2F)\ (AlR_2X)_a$ dans laquelle R désigne un groupe alkyle ayant de 1 à 12 atomes de carbone, X désigne un halogène autre que le fluor et $0{,}1 \leqslant a \leqslant 0{,}4$.

4. Activateur de polymérisation selon la revendication 3, caractérisé en ce que X désigne le chlore.

5. Système catalytique pour la polymérisation de l'éthylène et la copolymérisation de l'éthylène avec une $\alpha$-oléfine ayant de 3 à 8 atomes de carbone, comprenant d'une part au moins un activateur dérivé organométallique de l'aluminium et d'autre part au moins un catalyseur comprenant au moins un halogénure de métal de transition des groupes IV B à VI B de la Classification Périodique, l'état de valence dudit métal dans ledit halogénure n'étant pas supérieur à 3, le rapport atomique de l'aluminium de l'activateur au métal de transition du catalyseur étant compris entre 0,1 et 10, caractérisé en ce que ledit activateur est un activateur selon l'une des revendications 1 à 4.

6. Procédé de polymérisation de l'éthylène et de copolymérisation de l'éthylène avec une $\alpha$-oléfine ayant de 3 à 8 atomes de carbone, sous une pression comprise entre 200 et 2500 bars et à une température comprise entre 160° et 300°C, le temps de séjour moyen du système catalytique dans le réacteur de polymérisation étant compris entre 2 et 100 secondes, caractérisé en ce que la polymérisation est effectuée en présence d'un système catalytique selon la revendication 5.

7. Procédé selon la revendication 6, caractérisé en ce que la polymérisation est effectuée en présence d'un hydrocarbure inerte ayant jusqu'à 5 atomes de carbone.

8. Procédé selon l'une des revendications 6 et 7, caractérisé en ce que la polymérisation est effectuée en présence de 0,04 à 2 % en volume d'un agent de transfert de chaîne.

0055147

Office européen des brevets

# RAPPORT DE RECHERCHE EUROPEENNE

Numéro de la demande

EP 81 40 1734

| Catégorie | DOCUMENTS CONSIDERES COMME PERTINENTS<br>Citation du document avec indication, en cas de besoin, des parties pertinentes | Revendication concernée | CLASSEMENT DE LA DEMANDE (Int. Cl. 3) |
|---|---|---|---|
| X<br>Y | FR - A - 1 214 965 (HOECHST)<br>* exemple 1, tableau I, 4me essai * | 1-5,<br>6-8 | C 08 F 10/02<br>4/62<br>4/64 |
| D,Y | JP - B - 71 34 612 (SHOWA DENKO) (1-10-1971)<br>* revendications; page 2, colonne 3, lignes 18-29; colonne 4, lignes 21-27, en particulier ligne 21 *<br>& Chemical Abstracts, volume 76, no. 16, 17 avril 1972, page 20, résumé 86.410m | 1-5 | DOMAINES TECHNIQUES RECHERCHES (Int. Cl. 3)<br>C 08 F 10/00<br>10/14<br>110/00<br>110/14<br>210/00<br>210/16<br>4/64<br>4/62<br>4/68 |
| Y | FR - A - 2 202 897 (ETHYLENE-PLASTIQUE)<br>* revendications 1-3; page 2, lignes 6-11 * | 6-8 | |
| D,Y | FR - A - 1 255 970 (HOECHST)<br>* résumé 1°-3°; page 3, colonne de droite, ligne 8 - page 4, colonne de gauche, lignes 1-10; exemple A * | 1-5,7 | |

CATEGORIE DES DOCUMENTS CITES
X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| La Haye | 02-04-1982 | WEBER |

OEB Form 1503.1 06.78